# EUROPEAN PATENT APPLICATION

(11) **EP 4 023 519 A1**
(43) Date of publication of application: **06.07.2022**
(21) Application number: 21218494.9
(22) Date of filing: 31.12.2021
(51) Int. Cl.: B60W 30/095, B60W 30/12, B60W 60/00, B60W 50/00

(54) **VEHICLE CONTROL SYSTEM**

(30) Priority: 05.01.2021 GB 202100062
(71) Applicant: Nissan Motor Manufacturing (UK) Ltd, Bedford Bedfordshire MK43 0DB (GB); Renault s.a.s, 92100 Boulogne Billancourt (FR)
(72) Inventor: SHAH, Nirav, Cranfield, MK43 0DB (GB); SANO, Yasuhito, Cranfield, MK43 0DB (GB)
(74) Representative: Keltie LLP

(57) **Abstract**

Aspects of the present invention relate to methods (20) of controlling the trajectory of a vehicle (1). In particular, an aspect of the invention relates to a method (20) of switching from a first path (64), received from a first path planning system (10), to a second path (60), received from a second path planning system (12), for controlling the trajectory of a vehicle (1). The method comprises: receiving a control signal to switch from the first path (64) to the second path (60); determining a forecast trajectory of the vehicle (1) based on the second path (60); determining an offset between the forecast trajectory and a current trajectory of the vehicle (1) based on the first path (64); and switching from the first path (64) to the second path (60) in dependence on the offset being less than a threshold offset.

## Description

### TECHNICAL FIELD

The present disclosure relates to a method of controlling a vehicle. Aspects of the invention relate to a method of controlling the vehicle, to a control system, to a computer program, to a computer-readable data carrier and to a vehicle.

### BACKGROUND

Contemporary vehicles are known that feature Advanced Driver Assistance Systems (ADAS) that assist the driver in a variety of driving scenarios by providing a level of automated control of the vehicle. For example, path planning systems are known for determining a path, or route, for a vehicle to follow in certain driving conditions and electronically controlled steering systems are known for controlling the driving direction, or steering, of the vehicle, based on the determined path.

By way of example, a lane keeping assist system is a well-known path planning system that determines a path for the vehicle to follow based on lane markings detected on the surface of a roadway ahead of the vehicle. The lane keeping assist system outputs the path to an electronically controlled steering system and the electronically controlled steering system determines steering inputs based on the path to control the trajectory, or driving direction, of the vehicle along the roadway.

Such path planning systems are increasingly commonplace due to the technological developments in sensory technologies and the improved capabilities of on-board processing devices.

However, a challenge with such path planning systems is to be able to reliably determine a path for the vehicle to follow in different driving conditions. For example, a lane keeping assist system may be unable to determine a reliable path for the vehicle to follow in the absence of lane markings on the surface of the roadway.

It is an aim of the present invention to address one or more of the disadvantages associated with the prior art.

### SUMMARY OF THE INVENTION

According to an aspect of the invention there is provided a method of switching from a first path, received from a first path planning system, to a second path, received from a second path planning system, for controlling the trajectory of a vehicle. In other words, according to an aspect of the invention there is provided a method of switching from controlling the trajectory of the vehicle based on the first path to controlling the trajectory of the vehicle based on the second path. The method comprises: receiving a control signal to switch from the first path to the second path; determining a forecast trajectory (or driving direction) of the vehicle based on the second path; determining an offset between the forecast trajectory and a current trajectory of the vehicle based on the first path; and switching from the first path to the second path in dependence on the offset being less than a threshold offset (i.e. switching from controlling the trajectory of the vehicle based on the first path to controlling the trajectory of the vehicle based on the second path in dependence on the offset being less than the threshold offset).

In this manner, the method may use the threshold offset to advantageously ensure that switching from one path planning system to another path planning system is suitably comfortable, or even imperceptible to a user, as may be needed to provide continuous steering control as the vehicle changes roadways, for example.

Optionally, determining the forecast trajectory comprises determining the position of a first point on the second path that is offset from the vehicle by a first distance along a longitudinal axis of the vehicle; and wherein determining the offset between the forecast trajectory and the current trajectory comprises: determining the position of a second point on the first path that is also offset from the vehicle by the first distance along the longitudinal axis of the vehicle; and determining the distance between the first and second points. In this manner, the lateral distance between the first and second points can be easily compared at a suitably calibrated distance ahead of the vehicle to control the transition between the first and second paths.

In an example, determining the forecast trajectory may comprise determining a first steering angle, relative to a longitudinal axis of the vehicle, based on the second path. Determining the offset between the forecast trajectory and the current trajectory may, for example, comprise: determining a second steering angle, relative to the longitudinal axis of the vehicle, based on the first path; and determining an angular difference between the first and second steering angles.

The threshold offset may, for example, correspond to a change of less than or equal to 15 degrees in the driving direction of the vehicle. Such a change may be effectively imperceptible to a user, for example. Optionally, the threshold offset may, for example, correspond to a change of less than or equal to 10 degrees in the driving direction of the vehicle. Preferably, the threshold offset may, for example, correspond to a change of less than or equal to 5 degrees in the driving direction of the vehicle.

According to another aspect of the invention there is provided a method of controlling a trajectory (or driving direction) of a vehicle that includes a plurality of path planning systems. The method comprises: determining an activation state of each of the path planning systems; selecting a first one of the active path planning systems for controlling the trajectory of the vehicle; controlling the trajectory of the vehicle based on a first path determined by the selected path planning system; checking if a condition for switching to another one of the path planning systems is triggered; and in dependence on the switching condition being triggered: selecting a second one of the active path planning systems for controlling the trajectory of the vehicle; and switching from controlling the trajectory of the vehicle based on the first path to controlling the trajectory of the vehicle based on a second path determined by the second one of the path planning systems according to the method described in a previous aspect of the invention. That is to say receiving a control signal to switch from the first path to the second path; determining a forecast trajectory (or driving direction) of the vehicle based on the second path; determining an offset between the forecast trajectory and a current trajectory of the vehicle based on the first path; and switching from the first path to the second path in dependence on the offset being less than a threshold offset (i.e. switching from controlling the trajectory of the vehicle based on the first path to controlling the trajectory of the vehicle based on the second path in dependence on the offset being less than the threshold offset).

In this manner, the method may be configured to control the trajectory of the vehicle according to a path provided by a path planning system that is optimal for the respective driving conditions and to switch seamlessly to the second path, provided by another path planning system, in dependence on the switching condition, e.g. when the vehicle enters a new roadway.

The activation state may, for example, be one of an active state, a partially active state, and/or an inactive state. Optionally, the activation state of each of the path planning systems is determined based on: an ability of that path planning system to determine a path for the vehicle to follow; and an ability of that path planning system to locate the vehicle on that path. In this manner, a path planning system may become active when the vehicle enters a new roadway where it is possible for the path planning system to localise the vehicle and determine a path along the roadway for the vehicle.

The selection of the first one of the active path planning systems may, for example, be based on a ranking index that includes a relative ranking of the path planning systems. The relative ranking may, for example, be indicative of the relative robustness or reliability of the path planning system.

Optionally, the method further comprises selecting the ranking index from a plurality of ranking indexes, prior to selecting the first one of the active path planning systems, wherein each ranking index is associated with a corresponding geographical location and/or roadway classification. The selection of the ranking index may, for example, be based on: a geographical location of the vehicle; and/or a classification of the roadway ahead of the vehicle.

In an example, the method further comprises selecting another ranking index from the plurality of ranking indexes, prior to checking if the condition for switching to another one of the path planning systems is triggered, in dependence on the geographical location of the vehicle and/or the classification of the roadway ahead of the vehicle changing. In this manner, the method may select a ranking index corresponding to the location of the vehicle so that the subsequent selection of the applicable path planning system is made based on preferences that correspond to the current location.

Optionally, the switching condition is dependent on the activation states of the path planning systems. In this manner, when one of the path planning systems changes from an inactive to an active or partially active state, such change may trigger the switching condition to switch to the path produced by that path planning system, for example.

In an example, the switching condition may also be dependent on the relative ranking of the path planning systems according to the ranking index. In this manner, if the ranking index changes, for example based on the location of the vehicle, then another path planning system may be preferred producing the switching condition.

According to a further aspect of the invention there is provided a computer program comprising instructions which, when the program is executed by a computer, cause the computer to carry out the method described in either of the previous aspects of the invention.

According to yet another aspect of the invention there is provided a computer-readable data carrier having stored thereon the computer program described in a previous aspect of the invention.

According to a further aspect of the invention there is provided a control system for controlling the trajectory of a vehicle. The control system comprises one or more controllers configured to: receive a first path from a first path planning system of the vehicle; output the first path for controlling the trajectory of the vehicle; receive a second path from a second path planning system of the vehicle; receive a control signal to switch from controlling the trajectory of the vehicle based on the first path to controlling the trajectory of the vehicle based on the second path; determine a forecast trajectory (or driving direction) of the vehicle based on the second path in dependence on receiving the control signal; determine an offset between the forecast trajectory and a current trajectory of the vehicle based on the first path; and switch from outputting the first path for controlling the trajectory of the vehicle to outputting the second path in dependence on the offset being less than a threshold offset.

In an example, the one or more controllers are further configured to generate the control signal in dependence on detecting a switching condition being satisfied for switching from the first path to the second path.

The one or more controllers may, for example, be further configured to: receive one or more signals indicative of an activation state of each path planning system of a plurality of path planning systems of the vehicle, the plurality of path planning systems including the first and second path planning systems. The one or more controllers may, for example, be configured to: output the first path in dependence on the activation state of the first path planning system; and detect that the switching condition is satisfied in dependence on the activation state of the first and/or second path planning systems.

In an example, the one or more controllers are further configured to: output the first path for controlling the trajectory of the vehicle in dependence on a ranking index that includes a relative ranking of the path planning systems; and detect that the switching condition is satisfied in dependence on the ranking of the second path planning system in the ranking index. For example, the switching condition may be satisfied if the second path planning system is the highest ranking active path planning system.

Optionally, the one or more controllers may be further configured to: receive one or more signals indicative of a geographical location of the vehicle and/or a classification of the roadway ahead of the vehicle; and select the ranking index from a plurality of ranking indexes, each ranking index being associated with a corresponding geographical location and/or roadway classification, based on the geographical location of the vehicle and/or the classification of the roadway ahead of the vehicle.

In an example, the one or more controllers are further configured to: select another ranking index from the plurality of ranking indexes in dependence on receiving one or more signals indicative that the geographical location of the vehicle and/or the classification of the roadway ahead of the vehicle has changed. In this manner, the control system may select a ranking index corresponding to the location of the vehicle so that the subsequent selection of the applicable path planning system is made based on preferences that correspond to the current location.

According to a further aspect of the invention there is provided a vehicle comprising a computer program as described in a previous aspect of the invention, a computer-readable data carrier as described in another previous aspect of the invention, and/or a control system as described in a further previous aspect of the invention.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows an illustration of an example vehicle in accordance with an embodiment of the invention;
Figure 2 shows a schematic illustration of an example control system in accordance with an embodiment of the invention for the vehicle shown in Figure 1;
Figure 3 schematically illustrates an example path determined by a path planning system of the vehicle shown in Figure 1;
Figure 4 illustrates an example method in accordance with an embodiment of the invention of operating the control system, shown in Figure 2;
Figure 5 shows a schematic illustration of an example route towards a target destination;
Figure 6 shows an illustration of an example sub-method in accordance with an embodiment of the invention of switching from controlling the driving direction of the vehicle, shown in Figure 1, based on a current path planning system to another path planning system;
Figure 7 shows a schematic illustration of an example comparison between a current trajectory of the vehicle, shown in Figure 1, and a forecast trajectory of the vehicle;
Figure 8 shows a schematic illustration of another example comparison between a current trajectory of the vehicle, shown in Figure 1, and a forecast trajectory of the vehicle;
Figure 9 shows a schematic illustration of a further example comparison between a current trajectory of the vehicle, shown in Figure 1, and a forecast trajectory of the vehicle.

### DETAILED DESCRIPTION

Embodiments of the invention relate to a method of controlling the driving direction of a vehicle that includes a plurality of path planning systems.

Advantageously, the plurality of path planning systems determine respective paths for the vehicle to follow based on different inputs and/or inputs from different sources. This provides enhanced fail-safety in the absence of suitable inputs for one of the path planning systems.

For example, in the event that lane markings cannot be detected on a road surface ahead of the vehicle, a lane keeping system may be unable to determine a path for the vehicle to follow and an alternative path planning system may be used instead. In this manner, the plurality of path planning systems are able to reliably determine a path for the vehicle to follow in a variety of driving conditions.

In use, the method determines which of the plurality of path planning systems are active and selectively operates a preferred one of the active path planning systems to determine a path for the vehicle to follow. By 'active' it is intended to mean that the path planning system is able to determine a path for the vehicle to follow and to locate the vehicle on that path.

The selection of the preferred path planning system may be based on a ranking index, for example, that ranks the relative preference of the plurality of path planning systems. The relative preferences may be based on the relative consistency and/or accuracy of the respective paths that the path planning systems generate, for example.

The determined path is output to an electrically controlled steering system that controls the driving direction of the vehicle accordingly. In this manner, the selected path planning system effectively controls the driving direction of the vehicle.

However, as the vehicle drives towards a target destination, the preferred path planning system may change.

For example when the vehicle enters a new roadway or a particular geographical zone, the activation states of the path planning systems and/or the relative preferences of the path planning systems may change.

Advantageously, when such changes occur, the method may select another active path planning system to operate and determine an alternative path for the vehicle to follow. In this manner, a preferred path for the vehicle to follow can be provided in different driving conditions.

A challenge with this method is that the switch from controlling the steering of the vehicle based on the current path to controlling the steering of the vehicle based on the alternative path can cause the electronically controlled steering system to impart a large change in the driving direction of the vehicle. The change in driving direction may destabilise the vehicle or otherwise affect the comfort of the vehicle occupants.

Accordingly, embodiments of the invention also relate to a method of switching from controlling the trajectory of the vehicle based on the current (first) path to controlling the trajectory of the vehicle based on the alternative (second) path.

In particular, the invention is configured to make this switch in a controlled manner that may even be imperceptible to any vehicle occupants.

For this purpose, the method determines: i) a forecast trajectory of the vehicle based on the second path; ii) a current trajectory of the vehicle based on the first path; and iii) an offset between the forecast trajectory and the current trajectory of the vehicle, which is compared to a threshold offset.

This comparison is made to determine whether the offset between the forecast trajectory and the current trajectory is less than or equal to a threshold offset, thereby satisfying a threshold of correspondence to the current trajectory. The threshold offset may be configured to ensure that the changes in driving direction are within limits of passenger comfort.

For example, if the forecast trajectory changes the steering angle by less than 15 degrees relative to the current trajectory, the second path may be output to the electronically controlled steering system to switch to determining the driving direction of the vehicle based on the second path. Preferably, the second path may be output to the electronically controlled steering system if the forecast trajectory changes the steering angle by less than 10 degrees relative to the current trajectory, and more preferably by less than 5 degrees relative to the current trajectory.

However, if the change in steering angle is greater than or equal to such a threshold offset (e.g. greater than 15 degrees), the electronically controlled steering system may continue to steer the vehicle based on the first path and the switch may be postponed until there is sufficient correspondence between the first and second paths.

As shall become clear in the following description, the threshold offset ensures that relatively small changes in driving direction are imparted when switching between the path planning systems.

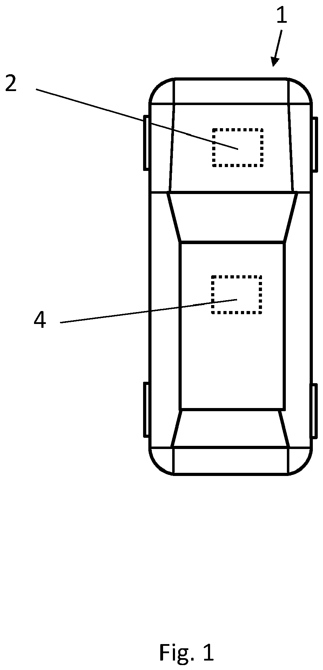

Figure 1 schematically illustrates an example vehicle 1 featuring an electronically controlled steering system 2 and a control system 4 for controlling the driving direction of the vehicle 1 in accordance with an embodiment of the present invention.

The electronically controlled steering system 2 is configured to receive a path for the vehicle 1 to follow, from the control system 4, and to control the driving direction of the vehicle 1 based on that path.

For this purpose, the electronically controlled steering system 2 may take any suitable form known in the art and may, for example, include: a steering mechanism configured to control the driving direction of the vehicle 1; a sensor system configured to detect the driving direction of the vehicle 1; an actuation system configured to control the steering system; and a controller configured to control the actuation system based on the received path.

The electronically controlled steering system 2 is not described in detail here to avoid obscuring the invention. For example, a commercially available BOSCH^{®} Electric Power Steering System may be suitable for providing this form of steering control.

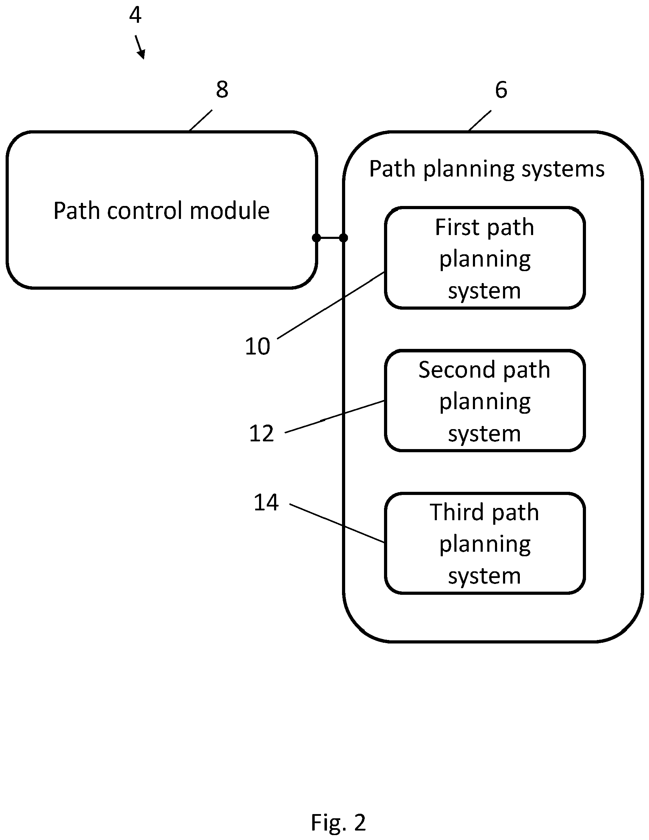

The control system 4 will now be described in more detail with reference to Figure 2, which schematically illustrates an example of the control system 4 in accordance with an embodiment of the present invention.

As shown in Figure 2, the control system 4 includes a plurality of path planning systems 6 and a path control module 8.

Each of the plurality of path planning systems 6 is configured to determine a respective path for the vehicle 1 to follow along a roadway based on a different sensory input and/or one or more inputs from different systems. This increases the likelihood that one of the path planning systems will be able to determine a path along a given roadway.

As the vehicle 1 drives along a roadway, each path planning system operates in one of an active state, a partially active state or an inactive state. In the active state, the path planning system is able to determine a path for the vehicle to follow and to locate the vehicle on that path. In the partially-active state, the path planning system is able to determine a partial or incomplete path for the vehicle to follow and to locate the vehicle on that path. In the inactive state, the path planning system is unable to determine a path for the vehicle to follow or otherwise unable to locate the vehicle on that path.

The relative completeness of the path, and hence the state of activation of the path planning system, may depend on the speed of travel of the vehicle 1. For example, the path planning system may be able to determine a partial path for the vehicle 1 to follow that extends 50 m ahead of the vehicle when travelling at 30 mph, but a path extending 50 m ahead of the vehicle 1 may be insufficient for the vehicle 1 to follow when travelling at 70 mph,

In the example shown in Figure 2, the plurality of path planning systems 6 includes a first path planning system 10, a second path planning system 12 and a third path planning system 14.

The first path planning system 10 takes the form of a lane keeping assist system configured to determine a first path for the vehicle 1 to follow based on inputs related to the detection of lane markings on the surface of the roadway. The activation of the first path planning system 10 is therefore dependent on one or more sensors (not shown) of the vehicle 1 being able to detect such lane markings on the surface of the roadway in order to determine the first path.

The second path planning system 12 takes the form of a visual simultaneous localisation and mapping (VSLAM) system configured to determine a second path for the vehicle 1 to follow by recognising the roadway that the vehicle 1 is travelling along. The activation of the second path planning system 12 is therefore dependent on:
i) the second path planning system 12 being able to receive inputs from one or more optical sensors (not shown) of the vehicle 1 comprising optical data corresponding to the roadway ahead of the vehicle 1;
ii) the second path planning system 12 being able to recognise the roadway that the vehicle 1 is travelling along based on landmark-recognition of the optical data; and
iii) the second path planning system 12 being able to reproduce a pre-determined route for the vehicle 1 to follow along that recognised roadway.

The third path planning system 14 takes the form of a global positioning system (GPS) configured to determine a third path for the vehicle 1 to follow based on GPS signals related to the geographical location of the vehicle 1. The activation of the third path planning system 14 is therefore dependent on the vehicle 1 being able to receive corresponding GPS signals from a transmitter, such as a GPS satellite.

Each of these path planning systems are well known in the art and are not described in detail here to avoid obscuring the invention. Nonetheless, further information can be found in the discussions of VSLAM techniques in "An Overview to Visual Odometry and Visual SLAM: Applications to Mobile Robotics" by K. Yousif, A. Bab-Hadiashar, and R. Hoseinnezhad in Intelligent Industrial Systems 1, 289-311 (2015) and the discussion of lane keeping assist systems in "Design of lane keeping assist system for autonomous vehicles," by A. Mammeri, G. Lu and A. Boukerche in 7th International Conference on New Technologies, Mobility and Security (NTMS), Paris, (2015), pp. 1-5.

In other examples, it shall be appreciated that the plurality of path planning systems 6 may include any other suitable path planning systems that are known in the art, such as a LIDAR based path planning system, and may include any multitude of path planning systems for this purpose.

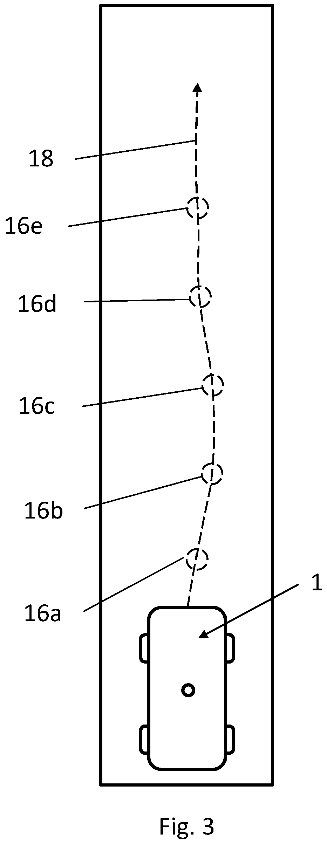

It shall be appreciated that each of the path planning systems may be configured to output a respective path comprising a series of target positions for the vehicle 1 to pass through. As illustrated in the example shown in Figure 3, each path may comprise a series of trajectory points 16a-e arranged ahead of the vehicle 1 that define a path 18 for the vehicle 1 to follow.

In this manner, the electronically controlled steering system 2 may receive a respective path 18 and determine a steering input or driving direction of the vehicle 1 based on the relative position of one or more of the trajectory points 16a-e to the vehicle 1.

For example, if the driving direction of the vehicle 1 is aligned with the relative direction of the next trajectory point 16a-e, the steering input may be negligible. However, if the relative direction of the next trajectory point 16a-e is not aligned with the current driving direction of the vehicle 1, the electronically controlled steering system 2 may determine a change in driving direction, or steering input, configured to redirect the vehicle 1 towards that trajectory point 16a-e.

On this basis, the electronically controlled steering system 2 may continuously or periodically determine steering inputs configured to control the driving direction of the vehicle 1 in accordance with the path 18 received from the plurality of path planning systems 6.

However, the control system 4 includes a multitude of path planning systems and so the path control module 8 is configured to selectively operate one of the active path planning systems to output a path 18 to the electronically controlled steering system 2 for the vehicle 1 to follow.

For this purpose, the path control module 8 may be configured to select one of the active path planning systems based on a ranking index that includes a relative ranking for each of the plurality of path planning systems 10, 12, 14. The ranking index may be stored in a memory storage device of the path control module 8, for example.

In an example, the path control module 8 may include a plurality of ranking indexes associated with different geographical locations of the vehicle 1 and/or different classifications of the roadway that the vehicle 1 is traversing. For example, roadway classifications such as a highway, a controlled-access highway, a limited access highway, a local road, or any other suitable roadway classification.

In such examples, the path control module 8 may be configured to select one of the ranking indexes in dependence on the geographical location of the vehicle 1 and/or the classification of the roadway. The geo-location of the vehicle 1 and/or the classification of may be indicated to the path control module 8 by one or more signals received from the plurality of path planning systems 10, 12, 14 and/or one or more other vehicle systems (not shown), for example.

For example, the vehicle 1 may move from a geographical zone or roadway associated with a first ranking index to a geographical zone or roadway associated with a second ranking index and the path control module 8 may re-select the ranking index upon entering the second roadway. Consequently, the path control module 8 may determine that a different path planning system 10, 12, 14 is preferred based on the second ranking index.

The plurality of ranking indexes may be stored in a memory storage device of the path control module 8, for example.

Once one of the path planning systems 10, 12, 14 has been selected, the path control module 8 is configured to operate the selected path planning system 10, 12, 14 so as to output the respective path 18 to the electronically controlled steering system 2, which controls the driving direction of the vehicle 1 accordingly.

As the vehicle 1 drives towards the target destination, the path control module 8 is advantageously further configured to selectively operate an alternative one of the plurality of path planning systems 10, 12, 14 to output its respective path 18 to the electronically controlled steering system 2 in dependence on a switching condition being triggered.

The switching condition indicates that an alternative one of the plurality of path planning systems 10, 12, 14 is preferred to the selected path planning system.

Accordingly, the switching condition may be triggered in dependence on one or more of: the geo-graphical location of the vehicle 1; a change of the activation state of one or more of the path planning systems; and/or a change in the ranking index.

For example, when the vehicle 1 moves from one roadway to another roadway the inputs to the path planning systems 10, 12, 14 may be affected, changing the activation states of one or more of the path planning systems 10, 12, 14. This may trigger the switching condition if a higher ranking path planning system becomes active or the currently selected path planning system changes to a partially-active state (only able to determine a partial path for the vehicle 1 to follow).

If the switching condition is triggered, the path control module 8 may select another one of the active path planning systems to operate.

The path control module 8 may also be configured to make the second selection, or reselection, based on the ranking index.

In an example, the path control module 8 may be configured to re-select the ranking index from the plurality of ranking indexes in dependence on the switching condition being triggered and to select the alternative path planning system to operate based on the selected ranking index. In this example, the ranking index may be re-selected based on the geo-location of the vehicle 1 and/or the classification of the roadway ahead of the vehicle 1, for example.

In another example, the switching condition may be associated with an alternative one of the path planning systems 10, 12, 14 and the path control module 8 may be configured to select that path planning system in response to the switching condition being triggered.

In relation to this, the path control module 8 is configured to manage the switching process so as to maximise the stability of the driving direction of the vehicle 1. For example, when switching between the path planning systems 10, 12, 14, the path control module 8 is configured such that the alternative path is only output to the electronically controlled steering system 2 in dependence on an offset between the current path and the alternative path being less than or equal to a threshold offset.

In other words, the alternative path must satisfy a threshold of correspondence to the current path for the path control module 8 to execute the switch, as shall become clear in the following description.

It shall be appreciated that the path control module 8 may include one or more controllers and each controller may comprise a control unit or computational device having one or more electronic processors.

A set of instructions may be provided that cause the one or more controllers, or control units, to implement a control method, such as the control methods described herein, when executed. The set of instructions may be embedded in one or more of the electronic processors. Alternatively, the set of instructions may be provided as software to be executed by one or more of the electronic processors.

The set of instructions may be embedded in a computer-readable storage medium (e.g., a non-transitory computer-readable storage medium) that may comprise any mechanism for storing information in a form readable by a machine or electronic processors/computational device. This may include, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

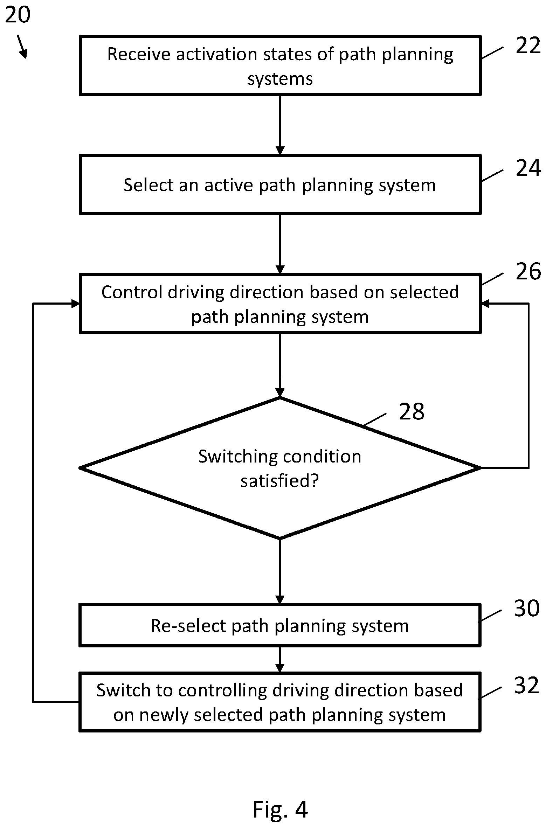

The operation of the control system 4 shall now be described with additional reference to Figures 4 to 9.

Figure 4 illustrates an example method 20 of operating the control system 4 in accordance with an embodiment of the invention.

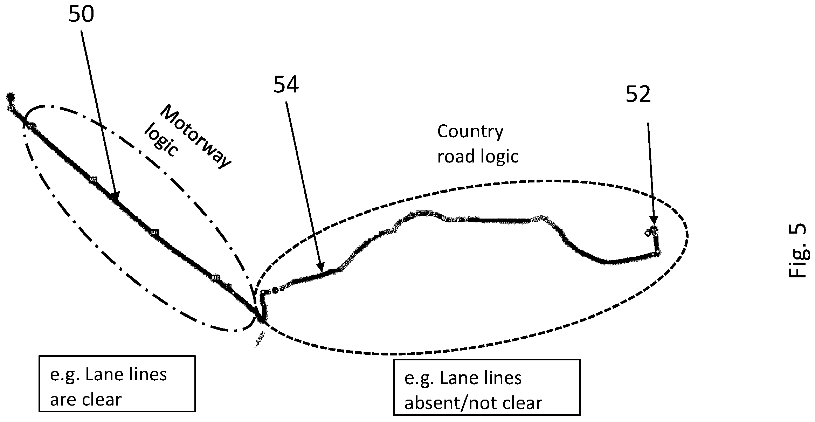

By way of example, the vehicle 1 may have entered a first roadway 50, as shown in Figure 5, and the control system 4 may be operated to control the driving direction of the vehicle 1 towards a target destination 52. The first roadway 50 may be a highway with clear and detectable lane markings on the road surface, for example.

In step 22, of the method 20, the path control module 8 determines the activation states of the plurality of path planning systems 10, 12, 14. In particular, the path control module 8 may determine whether each path planning system is operating in an active, partially-active or inactive state based on the ability of that path planning system to: i) determine a respective path for the vehicle 1 to follow along the first roadway 50; and ii) locate the vehicle 1 on that path.

For example, in step 22, the path control module 8 may determine whether the first path planning system 10 is able to sufficiently detect lane markings on the first roadway 50 to form a first path for the vehicle 1 to follow along the first roadway 50. The path control module 8 may also determine whether the second path planning system 12 is able to recognise the first roadway 50 and to retrieve a pre-determined second path, associated with the first roadway 50, for the vehicle 1 to follow. The path control module 8 may also determine whether the third path planning system 14 is able to receive GPS signals comprising sufficient information to determine a geo-location of the vehicle 1 on the first roadway 50 and a corresponding third path for the vehicle 1 to follow along the first roadway 50.

In the example shown in Figure 5, the first roadway 50 may not correspond to a recognised roadway and therefore the second path planning system 12 may be considered inactive at step 22. However, the first and third path planning systems 10, 14 may be considered active due to the availability of GPS signals and the ability of the vehicle 1 to detect lane marking on the road surface of the highway.

In step 24, the path control module 8 selects an active path planning system to operate in order to produce the path for the vehicle 1 to follow along the first roadway 50.

For this purpose, the path control module 8 may access the memory storage device (not shown) of the path control module 8 and select a ranking index that provides a relative ranking for each of the first, second and third path planning systems 10, 12, 14.

In an example, the path control module 8 may select the ranking index from a plurality of ranking indexes based on the geographical location of the vehicle 1, which corresponds to a position on the first roadway 50. For example, the path control module 8 may select a first ranking index based on the geo-location of the vehicle 1 when the vehicle 1 is driving on the first roadway 50

The first path planning system 10 may have the highest rank on the first ranking index, whilst the second path planning system 12 may have the second highest rank and the third path planning system 14 may have the third highest rank. The relative ranking may be determined on the basis of a perceived comfort of the vehicle occupants for a typical path provided by each path planning system, for example.

The path control module 8 may therefore select the first path planning system 10, in step 24, as the highest ranking active path planning system and operate the first path planning system 10 to determine a first path for the vehicle 1 to follow along the first roadway 50.

In step 26, the control system 4 controls the driving direction of the vehicle 1 based on the first path and steers the vehicle 1 along the first roadway 50.

For example, the path control module 8 may control the first path planning system 10 so as to output the first path to the electronically controlled steering system 2 and the electronically controlled steering system 2 may control the driving direction of the vehicle 1 based on that path, steering the vehicle 1 towards the target destination 52.

In step 28, the path control module 8 checks whether the switching condition is triggered as the vehicle 1 travels towards the target destination.

For this purpose, the path control module 8 may monitor the geo-location of the vehicle 1 and/or the activation states of the plurality of path planning systems 10, 12, 14.

If the switching condition is not triggered, the control system 4 continues to control the driving direction of the vehicle 1 along the first path, and proceeds towards the target destination 52, whilst repeating step 28.

If the switching condition is triggered, e.g. if one of the higher ranking path planning systems becomes active, the path control module 8 proceeds to re-select the path planning system in step 30.

For example, the vehicle 1 may leave the first roadway 50 and approach a second roadway 54, as shown in Figure 5. The second roadway 54 may be a recognised local roadway that lacks clearly defined lane markings along a portion of the road surface. Hence, the second path planning system 12 may change from an inactive state to an active state as the second roadway 54 is recognised and the first path planning system 10 may change from an active state to a partially-active state due to the lack of lane markings.

The change in the geo-location of the vehicle 1 and/or the change in the activation states of the first and second path planning systems 10, 12 may trigger the switching condition, in step 28.

Hence, in step 30, the path control module 8 may select another active path planning system to operate in order to produce a path for the vehicle 1 to follow along the second roadway 54.

For this purpose, the path control module 8 may access the ranking index again or select another ranking index corresponding to the geo-location of the vehicle 1 and/or the classification of the second roadway 54, for example.

For example, the geographical location of the vehicle 1 on the second roadway 54 may be associated with a second ranking index, in which the second path planning system 12 is the highest ranking path planning system, the first path planning system 10 is the second highest ranking path planning system and the third path planning system 14 is the third highest ranking path planning system.

The path control module 8 may therefore select the second ranking index and proceed to select the second path planning system 12, in step 30, accordingly. In this instance, the second path planning system 12 is selected because the first path planning system 10 has changed to a partially-active state, whilst the second path planning system 12 is in an active state and, in any case, higher ranking than the first path planning system 10.

In step 32, the control system 4 switches from controlling the driving direction of the vehicle 1 based on the first path to controlling the driving direction of the vehicle 1 based on the second path, whilst driving the vehicle 1 along the second roadway 54.

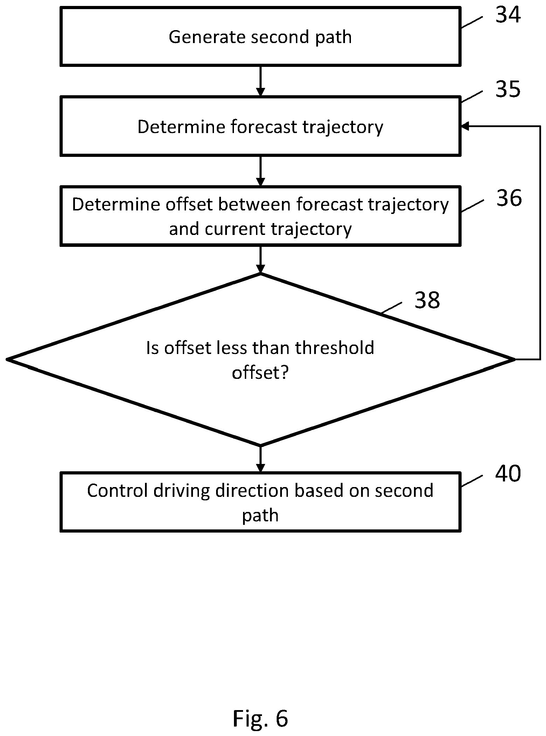

To manage this transition, the path control module 8 may compare a forecast trajectory of the vehicle 1, based on the second path, to a current trajectory of the vehicle 1, based on the first path. The path control module 8 may conditionally output the second path to the electronically controlled steering system 2 when there is sufficient correspondence between the first and second paths, as will be described in more detail with reference to the following sub-steps 34 to 40, shown in Figure 6.

In sub-step 34, the path control module 8 continues to operate the first path planning system 10 to determine the first path, which is output to the electronically controlled steering system 2 for controlling the driving direction of the vehicle 1.

However, once the switching condition has been triggered, the path control module 8 additionally operates the other path planning system, i.e. the second path planning system 12, to determine an alternative path, i.e. the second path.

In sub-step 35, the path control module 8 determines a forecast trajectory, or driving direction, for the vehicle 1 based on the second path and the path control module 8 determines an offset between the forecast trajectory and a current trajectory, based on the first path, in sub-step 36. The path control module 8 compares the offset to a threshold offset, in sub-step 38.

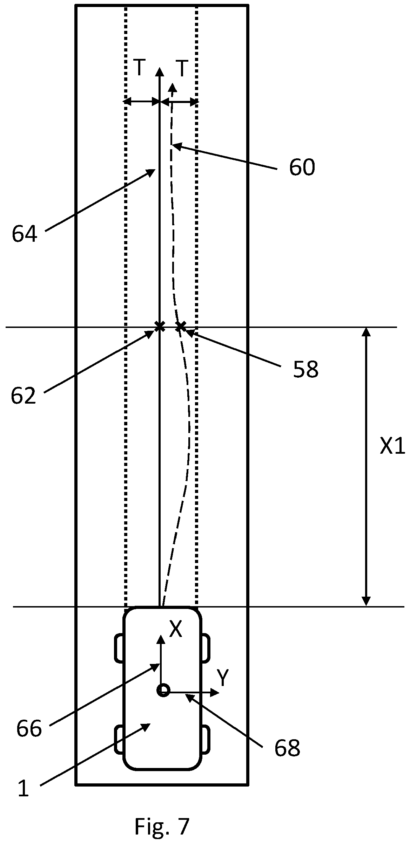

In an example, the forecast trajectory is defined by a first point 58, arranged ahead of the vehicle 1, through which the vehicle 1 would pass if the vehicle 1 were steered along the second path 60, as shown in Figure 7. The current trajectory may be defined by a second point 62, arranged the same distance ahead of the vehicle 1 as the first point 58, through which the vehicle 1 will pass if the vehicle 1 is steered along the first path 64, as also shown in Figure 7.

In this example, the offset between the forecast trajectory and the current trajectory takes the form of a lateral distance between the first and second points 58, 62.

Accordingly, the threshold offset takes the form of a maximum distance between the first and second points 58, 62.

For example, with reference to Figure 7, the path control module 8 may determine the forecast trajectory as a first point 58 on the second path 60 having co-ordinates X1, Y1, in sub-step 35. X1 may be a pre-determined distance ahead of the vehicle 1 along a longitudinal axis 66 of the vehicle 1, and Y1 may be a transverse distance along a perpendicular axis 68 to the longitudinal axis 56.

In sub-step 36, the path control module 8 may determine the current trajectory as a second point 62 on the first path 64 having co-ordinates X1, Y2, where Y2 is a second transverse distance along the perpendicular axis 58.

Accordingly, the path control module 8 may determine the offset between the forecast trajectory and the current trajectory based on the distance between the first and second points 58, 62, i.e. Offset = Y1 - Y2, in sub-step 36.

In sub-step 38, the threshold offset may take the form of a distance, T, from the second point 62. Hence, the threshold of correspondence between the first and second path 64, 60 may be satisfied if: Y1 - Y2 ≤ T, as shown in Figure 7.

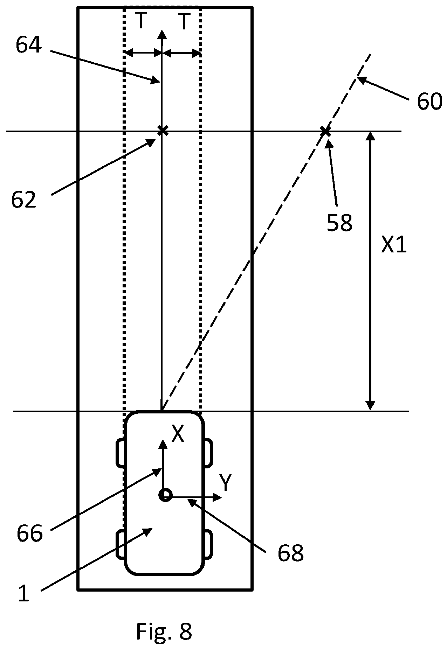

When the offset between the forecast trajectory and the current trajectory exceeds the threshold offset, as shown in Figure 8, the threshold of correspondence between the first and second paths 64, 60 is not satisfied and so the control system 4 continues to control the driving direction of the vehicle 1 based on the first path 64, repeating sub-steps 34 to 38 until the offset is less than or equal to the threshold offset

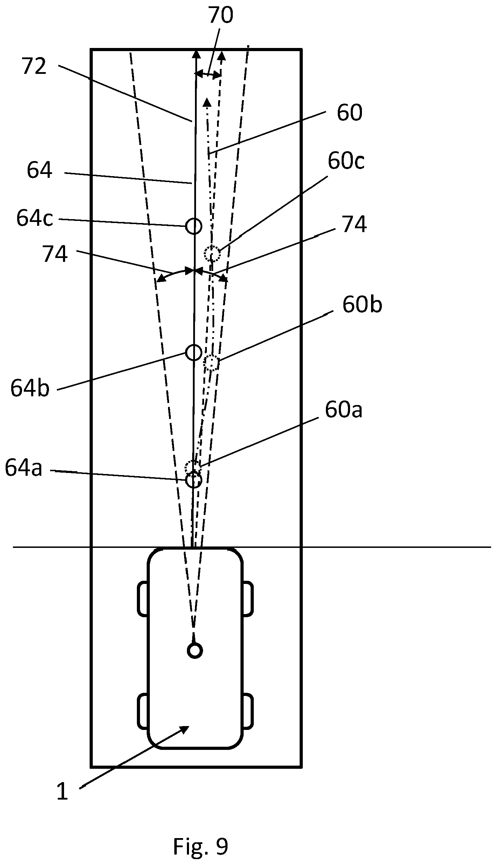

In another example, shown in Figure 9, the path control module 8 may determine the forecast trajectory as a first steering angle 70 relative to the longitudinal axis 66 of the vehicle 1. The current trajectory may be directed along the longitudinal axis 66 of the vehicle 1 or the path control module 8 may otherwise determine the current trajectory as a second steering angle 72 relative to the longitudinal axis 66 of the vehicle 1.

For example, the path control module 8 may determine the first steering angle 70, in sub-step 34, based on the relative direction of one or more of the series of trajectory points 60a-c forming the second path 60 to the longitudinal axis 66 of the vehicle 1.

In sub-step 35, the path control module 8 may determine the second steering angle 72, which may be aligned with the current trajectory of the vehicle 1 or otherwise determined based on the relative direction of one or more of the series of trajectory points 64a-c forming the first path 64 to the longitudinal axis 66 of the vehicle 1.

Hence, the path control module 8 may determine the offset between the forecast trajectory and the current trajectory based on the angle of deviation between the first and second steering angles 70, 72, in sub-step 36.

The threshold offset may take the form of a maximum angle of deviation 74 from the second steering angle 72 in a first and/or second direction, as shown in Figure 9.

In sub-step 38, the threshold of correspondence may be satisfied if the offset is less than the maximum angle of deviation from the current trajectory.

In each of the examples described above, the threshold offset may depend on the path planning systems that the control system 4 is switching between. For example, the threshold offset may take a first value when switching from the first path planning system 10 to the second path planning system 12, but the threshold offset may take a larger second value when switching from the first path planning system 10 to the third path planning system 14, for example.

If the offset between the forecast trajectory and the current trajectory is greater than the threshold offset, the control system 4 continues to control the driving direction of the vehicle 1 based on the first path and repeats sub-steps 34 to 38 until the offset between the forecast trajectory and the current trajectory falls below or equal to the threshold offset.

In this manner, the electronically controlled steering system 2 continues to steer the vehicle 1 based on the first path until the change in driving direction caused by steering the vehicle 1 based on the second path is sufficiently small, e.g. imperceptible to a vehicle occupant.

If the offset between the forecast trajectory and the current trajectory is less than or equal to the threshold offset, the control system 4 controls the driving direction of the vehicle 1 based on the second path (determined by the second path planning system 12), in sub-step 40.

For example, the path control module 8 operates the second path planning system 12 to determine the second path based on the recognised roadway and to output the second path to the electronically controlled steering system 2. Accordingly, the electronically controlled steering system 2 controls the driving direction of the vehicle 1 to steer the vehicle 1 along the second path.

The vehicle 1 proceeds to drive along the second roadway 54 according to the second path, and continues to check for further switching conditions being triggered, in step 28, as the vehicle 1 drives towards the target destination.

If a further switching condition is triggered, the control system 4 may selectively operate the first or third path planning systems to determine a respective path for the vehicle to follow substantially as described in in steps 28 and 30.

In this manner, the invention provides for automated steering of the vehicle 1 towards a target destination 52 using a plurality of path planning systems 10, 12, 14 that provide fail-safe operation in the event that inputs to one of the path planning systems are intermittently available.

It will be appreciated that various changes and modifications can be made to the present invention without departing from the scope of the present application.

## Claims

1. A method (20) of switching from a first path, received from a first path planning system (10), to a second path, received from a second path planning system (12), for controlling the trajectory of a vehicle (1), the method (20) comprising:
receiving a control signal to switch from the first path (64) to the second path (60);
determining a forecast trajectory of the vehicle (1) based on the second path (60);
determining an offset between the forecast trajectory and a current trajectory of the vehicle (1) based on the first path (64); and
switching from the first path (64) to the second path (60) in dependence on the offset being less than a threshold offset.

2. A method (20) according to claim 1, wherein determining the forecast trajectory comprises determining the position of a first point (58) on the second path (60) that is offset from the vehicle (1) by a first distance along a longitudinal axis of the vehicle (1); and
wherein determining the offset between the forecast trajectory and the current trajectory comprises:
determining the position of a second point (62) on the first path (64) that is also offset from the vehicle (1) by the first distance along the longitudinal axis of the vehicle (1); and determining the distance between the first and second points (58, 62).

3. A method (20) according to claim 1, wherein determining the forecast trajectory comprises determining a first steering angle, relative to a longitudinal axis of the vehicle (1), based on the second path (60); and
wherein determining the offset between the forecast trajectory and the current trajectory comprises:
determining a second steering angle, relative to the longitudinal axis of the vehicle (1), based on the first path (64); and
determining an angular difference between the first and second steering angles;
optionally wherein the threshold offset corresponds to a change of less than or
equal to 10 degrees in the driving direction of the vehicle (1).

4. A method (20) of controlling a trajectory of a vehicle (1) that includes a plurality of path planning systems (10, 12, 14), the method (20) comprising:
determining an activation state of each of the path planning systems (10, 12, 14);
selecting a first one of the active path planning systems (10, 12, 14) for controlling the trajectory of the vehicle (1);
controlling the trajectory of the vehicle (1) based on a first path (64) determined by the selected path planning system (10, 12, 14);
checking if a condition for switching to another one of the path planning systems (10, 12, 14) is triggered; and
in dependence on the switching condition being triggered:
selecting a second one of the active path planning systems (10, 12, 14) for controlling the trajectory of the vehicle (1); and
switching from controlling the trajectory of the vehicle (1) based on the first path (64) to controlling the trajectory of the vehicle (1) based on a second path (60) determined by the second one of the path planning systems (10, 12, 14) according to the method (20) of any preceding claim.

5. A method (20) according to claim 4, wherein the activation state of each of the path planning systems (10, 12, 14) is determined based on: an ability of that path planning system (10, 12, 14) to determine a path for the vehicle (1) to follow; and an ability of that path planning system (10, 12, 14) to locate the vehicle (1) on that path.

6. A method (20) according to claim 4 or claim 5, wherein the selection of the first one of the active path planning systems (10, 12, 14) is based on a ranking index that includes a relative ranking of the path planning systems (10, 12, 14).

7. A method (20) according to claim 6, further comprising selecting the ranking index from a plurality of ranking indexes, prior to selecting the first path planning systems (10, 12, 14), wherein each ranking index is associated with a corresponding geographical location and/or roadway classification, and wherein the selection of the ranking index is based on:
a geographical location of the vehicle (1); and/or
a classification of the roadway ahead of the vehicle (1).

8. A method (20) according to claim 7, further comprising selecting another ranking index from the plurality of ranking indexes, prior to checking if the condition for switching to another one of the path planning systems (10, 12, 14) is triggered, in dependence on the geographical location of the vehicle (1) and/or the classification of the roadway ahead of the vehicle (1) changing.

9. A method (20) according to any of claims 4 to 8, wherein the switching condition is dependent on the activation states of the path planning systems (10, 12, 14).

10. A method (20) according to claim 9, when dependent on claim 6, wherein the switching condition is also dependent on the relative ranking of the path planning systems (10, 12, 14) according to the ranking index.

11. A computer program comprising instructions which, when the program is executed by a computer, cause the computer to carry out a method (20) according to any of claims 1 to 3 or a method (20) according to any of claims 4 to 10.

12. A computer-readable data carrier having stored thereon a computer program according to claim 11.

13. A control system (4) for controlling the trajectory of a vehicle (1), the control system (4) comprising one or more controllers (8) configured to:
receive a first path (64) from a first path planning system (10) of the vehicle (1);
output the first path (64) for controlling the trajectory of the vehicle (1);
receive a second path (60) from a second path planning system (12) of the vehicle (1);
receive a control signal to switch from controlling the trajectory of the vehicle (1) based on the first path (64) to controlling the trajectory of the vehicle (1) based on the second path (60);
determine a forecast trajectory of the vehicle (1) based on the second path (60) in dependence on receiving the control signal;
determine an offset between the forecast trajectory and a current trajectory of the vehicle (1) based on the first path (64); and
switch from outputting the first path (64) for controlling the trajectory of the vehicle (1) to outputting the second path (60) in dependence on the offset being less than a threshold offset.

14. A control system (4) according to claim 13, wherein the one or more controllers (8) are further configured to generate the control signal in dependence on detecting a switching condition being satisfied for switching from the first path (64) to the second path (60).

15. A vehicle (1) comprising at least one of:
a computer program according to claim 11;
a computer-readable data carrier according to claim 12; and/or
a control system (4) according to claim 13 or claim 14.
